# EUROPÄISCHE PATENTSCHRIFT

(11) **EP 0 992 387 B1**
(45) Veröffentlichungstag und Bekanntmachung des Hinweises auf die Patenterteilung: **26.03.2003**
(21) Anmeldenummer: 99111702.9
(22) Anmeldetag: 17.06.1999
(51) Int. Cl.: B60K 31/00, G01S 13/93

(54) **Verfahren zur Längsbewegungssteuerung eines Kraftfahrzeuges**
Method for controlling the longitudinal displacement of a motor vehicle
Procédé de commande du déplacement longitudinal d'un véhicule à moteur

(30) Priorität: 25.07.1998 DE 19833645
(43) Veröffentlichungstag der Anmeldung: 12.04.2000
(73) Patentinhaber: DaimlerChrysler AG, 70567 Stuttgart (DE)
(72) Erfinder: Birmili, Gerd, 70499 Stuttgart (DE); Desens, Jens, Dr., 72108 Rottenburg (DE); Missel. Joachim, 72181 Starzach (DE); Nöcker, Gerhard, 73033 Göppingen (DE); Schwenk, Bernd, 71149 Bondorf (DE)

(56) Entgegenhaltungen:
- DE-A- 4 407 082
- HIPP E ET AL: "INTELLIGENTE FAHRER- UNTERSTUETZUNG: DER ABSTANDSGEREGELTE TEMPOMAT" INTERNATIONALES VERKEHRSWESEN,DE,TETZLAFF VERLAG, DARMSTADT, Bd. 49, Nr. 7/08, 1. Juli 1997 (1997-07-01), Seiten 403-407, XP000724196 ISSN: 0020-9511

## Beschreibung

Die Erfindung bezieht sich auf ein Verfahren und eine Vorrichtung zur Längsbewegungssteuerung eines Kraftfahrzeuges, mit denen bei Vorliegen vorgebbarer Einschaltbedingungen, die das Vorhandensein eines Frontfahrzeuges, d.h. eines vorausfahrenden Fahrzeuges, umfassen, ein Abstandsregelungsmodus aktivierbar ist, in welchem der Abstand des Fahrzeugs zum Frontfahrzeug selbsttätig geregelt wird.

Derartige Verfahren und Vorrichtungen sind verschiedentlich bekannt, z.B. unter dem Begriff Abstandsregeltempomat. Mit ihrer Hilfe läßt sich ein Fahrzeug in entsprechenden Fahrbetriebsphasen dadurch selbsttätig führen, daß im aktivierten Abstandsregelungsmodus eine zugeordnete Abstandsregeleinrichtung dafür sorgt, daß zum Frontfahrzeug ein vorgebbarer Sollabstand eingehalten wird. Dies soll den Fahrer bezüglich Längsbewegungssteuerung entlasten, wobei die selbsttätige Abstandsregelung vom herkömmlichen Typ erst oberhalb einer gewissen Mindestgeschwindigkeit von typischerweise 30 km/h bis 50 km/h zuverlässig arbeitet und daher nur in diesem höheren Geschwindigkeitsbereich aktiviert werden kann, d.h. vor allem bei Überlandfahrten, insbesondere auf Autobahnen. Um die Einhaltung des Abstands zum Frontfahrzeug zu gewährleisten, greift die Abstandsregeleinrichtung üblicherweise sowohl in den Antriebsstrang ein, vor allem zur Durchführung von Beschleunigungsphasen, als auch in die Bremsanlage zur Bewirkung von erforderlichen Fahrzeugverzögerungen.

Bei einem Verfahren und einer Vorrichtung dieser Art, wie sie in der Offenlegungsschrift DE 33 25 713 A1 beschrieben sind, ist speziell vorgesehen, das Fahrzeug während aktiver Abstandsregelungsphasen dadurch zu verzögern, daß zunächst in diesem Sinne auf eine Drosselklappe des Kraftfahrzeugmotors und erst in kritischen Fahrsituationen auf die Bremsanlage eingewirkt wird. Durch diese gestuften Verzögerungsmaßnahmen soll die Notwendigkeit von Vollbremsungen vermieden werden.

Bei einem weiteren Verfahren und einer weiteren Vorrichtung dieser Art, wie sie in der Patentschrift DE 42 08 012 C2 offenbart sind und die neben einer übergeordneten Abstandsregelung eine Längsgeschwindigkeitsregelung für Fahrbetriebsphasen beinhalten, in denen kein zur Abstandsregelung geeignetes Frontfahrzeug vorhanden ist, wird speziell vorgeschlagen, bei aktivierter Abstandsregelung dann, wenn das Frontfahrzeug verschwindet und gleichzeitig eine Kurve erkannt wird, mittels eines entsprechenden Signals eine signifikante Verzögerung des Fahrzeugs auszulösen und bis zum Ende der Kurve und/oder dem Wiederauftauchen eines Frontfahrzeugs den Fahrgeschwindigkeitsregler auszublenden und in jedem Fall nach dem Ende der Kurve eine durch die Geschwindigkeits- oder die Abstandsregelung vorgegebene Geschwindigkeit wieder aufzunehmen. Durch die spürbare Fahrzeugverzögerung erkennt der Fahrzeugführer die bevorstehende, möglicherweise problematische Kurvensituation. Gleichzeitig wird mit dieser Vorgehensweise vermieden, daß das Fahrzeug in der Kurve nach Verlieren des Frontfahrzeugs automatisch mit konstanter Geschwindigkeit weiterfährt, wie dies dort für den kurvenfreien Fall vorgesehen ist.

Die herkömmlichen, erst ab einer bestimmten Mindestgeschwindigkeit aktivierten Abstandsregelungen eignen sich aufgrund ihrer Regelungsphilosophie nicht ohne weiteres für den Bereich geringer Geschwindigkeiten, wie z.B. im Schleichverkehr, dem sogenannten Stop&Go-Verkehr. Es besteht jedoch auch für diesen Geschwindigkeitsbereich der Wunsch nach einer selbsttätig abstandsregelnden Längsbewegungssteuerung, worauf z.B. in dem Zeitschriftenaufsatz J. Haugen, Smart Cruise: A Deployment Issue, Automotive Industries, Mai 1993, Seite 58, hingewiesen wird. Um herkömmliche, für einen höheren Geschwindigkeitsbereich ausgelegte Abstandsregelungen in einem niedrigen Geschwindigkeitsbereich bis herunter zum Fahrzeugstillstand mit der erforderlichen Verkehrstauglichkeit in der Praxis einsetzen zu können, bedarf es jedoch wesentlicher Modifikationen insbesondere der Regelungsphilosophie, speziell des Bedienkonzeptes.

In der gattungsbildenden Offenlegungsschrift DE 44 07 082 A1 ist ein Fahrzeuglängsbewegungs-Steuerungssystem mit wahlweiser Abstands- oder Geschwindigkeitsregelung offenbart, bei dem im Fall einer aktivierten Abstandsregelung dann, wenn das vorausfahrende Fahrzeug aus dem Beobachtungsbereich des Systems verschwindet, das eigene Fahrzeug in einen Ausroll-Zustand mit geschlossener Drosselklappe gebracht und der Fahrer durch ein Anzeigesignal über die Beendigung der aktiven Abstandsregelung informiert wird und die Fahrzeugführung manuell übernehmen kann. Zur Aktivierung der Abstandsregelungs-Betriebsart wird zunächst festgestellt, ob vorgegebene Einschaltbedingungen vorliegen, was dann dem Fahrzeugführer angezeigt wird. Erst wenn dieser daraufhin einen gewünschten Sollabstand eingestellt und ein Gaspedal betätigt hat, wird die Abstandsregelung aktiv. Als Einschaltbedingungen sind vorgesehen, daß sich das vorausfahrende Zielfahrzeug innerhalb eines vorgebbaren Abstandsbereichs von z.B. zwischen 20m und 100m befindet und die Relativgeschwindigkeit zwischen dem vorausfahrenden und dem eigenen Fahrzeug innerhalb eines abstandsabhängig vorgegebenen Bereichs um den Wert null herum liegt, z.B. je nach Fahrzeugabstand betraglich zwischen 0 und 20km/h.

In der Offenlegungsschrift DE 195 44 925 A1 sind eine Vorrichtung und ein Verfahren zur Abstands- und Geschwindigkeitsregelung beschrieben, bei denen die Aktivität der Abstands- bzw. Geschwindigkeitsregelung an bestimmte Bedingungen geknüpft ist, wie z.B. daß sich ein Insasse auf dem Fahrersitz befindet, daß die Fahrertür oder andere Fahrzeugtüren geschlossen sind und/oder sich ein Getriebe in einer Fahrt-Stellung befindet. Außerdem wird die Fahrtregelung vorzugsweise automatisch abgestellt, wenn der Fahrer ein Gaspedal bzw. eine Drosselklappe oder eine Bremssteuerung des Fahrzeugs betätigt. Wurde die automatische Fahrtregelung deaktiviert, weil eine oder mehrere der vorgegebenen Bedingungen nicht mehr erfüllt waren, erfolgt eine erneute Aktivierung der Regelung nur, wenn der Fahrer dies anfordert.

Der Erfindung liegt als technisches Problem die Bereitstellung eines Verfahrens der eingangs genannten Art zugrunde, die eine Längsbewegungssteuerung eines Kraftfahrzeuges ermöglichen, welche die Möglichkeit einer vorteilhaften und verkehrstauglichen Abstandsregelung auch im Bereich niedriger Geschwindigkeiten bis hin zum Fahrzeugstillstand und insbesondere im Stop&Go-Verkehr umfaßt.

Die Erfindung löst dieses Problem durch die Bereitstellung eines Verfahrens mit den Merkmalen des Anspruchs 1

Gemäß dem Verfahren nach Anspruch 1 beinhalten die Einschaltbedingungen unter anderem, daß die Fahrgeschwindigkeit des eigenen Fahrzeugs unterhalb eines vorgebbaren Geschwindigkeitsgrenzwertes liegt. Dadurch kann das Längsbewegungssteuerungsverfahren speziell für eine Abstandsregelung im niedrigen Geschwindigkeitsbereich bis herunter zum Fahrzeugstillstand und damit insbesondere für den Stop&Go-Verkehr ausgelegt werden. Nur in diesem Bereich niedrigerer Geschwindigkeiten des eigenen Fahrzeugs von z.B. weniger als 40 km/h ist die Aktivierung des Abstandsregelungsmodus möglich. Für höhere Geschwindigkeitsbereiche sind dann gegebenenfalls anders ausgelegte Abstandsregelverfahren zu verwenden.

Es ist weiterhin vorgesehen, bei bislang deaktiviertem Abstandsregelungsmodus dann, wenn die vorgebbaren Abstandsregelungs-Einschaltbedingungen vorliegen, nicht sofort und automatisch den Abstandsregelungsmodus zu aktivieren, sondern zunächst in einen Bereitschaftsmodus überzugehen, in welchem ein fahrerseitig erkennbares Bereitschaftssignal angezeigt wird. Erst wenn während dieses aktivierten Bereitschaftsmodus ein fahrerseitiges, d.h. vom Fahrzeugführer selbst oder einem anderen Fahrzeuginsassen auszulösendes Abstandsregelungsaktivierungssignal eingegeben wird, wird der Abstandsregelungsmodus aktiviert, in welchem die Längsbewegung des Fahrzeugs selbsttätig dergestalt gesteuert wird, daß das Fahrzeug in einem vorgebbaren Abstand einem Frontfahrzeug, d.h. einem in der gleichen Richtung vorausfahrenden Fahrzeug, folgt. Mit dieser Bedienphilosophie wird erreicht, daß einem Frontfahrzeug stets nur auf vorherige Bestätigung durch den Fahrzeugführer oder einen anderen Fahrzeuginsassen automatisch abstandsgeregelt gefolgt wird. Dies ermöglicht automatische Abstandsregelphasen auch im Bereich niedriger Fahrgeschwindigkeiten, in welchem die Fahrzeugabstände und damit auch die erforderlichen Reaktionszeiten geringer als im höheren Geschwindigkeitsbereich sind. Die Auswahl eines Frontfahrzeuges, dem selbsttätig abstandsregelnd gefolgt werden kann, bleibt auf diese Weise voll in der Kontrolle des Fahrzeugführers.

Darüber hinaus ist vorgesehen, daß bei bislang aktiviertem Abstandsregelungsmodus dann, wenn vorgebbare Abschaltbedingungen vorliegen, zunächst ein Ausrollmodus aktiviert wird, in welchem ein Abschaltaufforderungssignal angezeigt und gleichzeitig das Fahrzeug stetig verlangsamt wird. Erst wenn der Fahrzeugführer oder ein anderer Fahrzeuginsasse im aktivierten Ausrollmodus ein Abstandsregelungs-Abschaltsignal eingibt, wird diese selbsttätige Ausroll-Längsbewegungssteuerung beendet, und die Längsbewegungs-Steuerung des Fahrzeugs wird anschließend vollständig dem Fahrzeugführer überlassen. Wenn während des Ausrollmodus zu einem bestimmten Zeitpunkt die Einschaltbedingungen erfüllt sind, wird bei Eingabe des fahrerseitigen Abstandsregelungs-Aktivierungssignals ein neuer Abstandsregelungsmodus aktiviert. Die Abschaltbedingungen umfassen vorzugsweise mindestens den Fall, daß das Frontfahrzeug, nach dem sich die Abstandsregelung richtet, während des aktiven Abstandsregelungsmodus verlorengeht. Vorzugsweise kann dabei versucht werden, im Ausrollmodus die selbsttätige Längsbewegungssteuerung dergestalt aufrechtzuerhalten, daß die Einhaltung eines vorgebbaren Mindestabstands zu vor dem Fahrzeug befindlichen Objekten sichergestellt und damit ein zu nahes Auffahren auf vorausfahrende Fahrzeuge oder andere Objekte selbsttätig verhindert wird. Der Ausrollmodus gewährleistet die Beendigung einer jeweiligen Abstandsregelungsphase und die Übernahme der Längsbewegungssteuerung durch den Fahrzeugführer mit hoher Verkehrssicherheit auch im niedrigen Geschwindigkeitsbereich und damit im Bereich geringer Fahrzeugabstände.

Bei einem nach Anspruch 2 weitergebildeten Verfahren beinhalten die Einschaltbedingungen des weiteren, daß ein Frontfahrzeug detektiert wird und die für eine eventuelle anschließende selbsttätige Abstandsregelphase zur Einhaltung eines gewünschten Soll-. abstandes erforderliche Sollbeschleunigung einen vorgebbaren Beschleunigungsgrenzwert nicht überschreitet. Dies bedeutet, daß bei bislang deaktiviertem Abstandsregelungsmodus der Bereitschaftsmodus, in welchem der Fahrer dann den Abstandsregelungsmodus anfordern kann, nur aktiviert wird, wenn der Fahrer das Fahrzeug zuvor mit geringer Relativgeschwindigkeit und einem nicht zu stark vom Sollabstand abweichenden Abstand hinter dem Frontfahrzeug hält. Dies vermeidet unerwünscht ruckartige Beschleunigungsvorgänge.

Bei einem nach Anspruch 3 weitergebildeten Verfahren bestehen die Abschaltbedingungen darin, daß das Frontfahrzeug während eines aktiven Abstandsregelungsmodus verlorengeht, beispielsweise weil es abgebogen ist oder die Fahrbahn gewechselt hat, oder daß eine Fahrzeugtür länger als ein vorgebbarer Türöffnungsdauergrenzwert geöffnet ist. Die erstgenannte Maßnahme gewährleistet ein sicheres, sich verlangsamendes Weiterfahren des Fahrzeugs im Ausrollmodus bei nicht mehr detektiertem Frontfahrzeug, bis der Fahrer die manuelle Übernahme der Längsbewegungssteuerung durch das entsprechende Abstandsregelungs-Abschaltsignal einleitet oder die Einschaltbedingungen wieder vorliegen, insbesondere wieder ein geeignetes Frontfahrzeug detektiert wird, und eine neue Abstandsregelungsphase vom Fahrer aktiviert wird. Die letztgenannte Bedingung verhindert, daß das Fahrzeug weiterfährt, wenn ein Fahrzeuginsasse bei aktivierter Abstandsregelung, jedoch stehendem oder sehr langsam fahrendem Fahrzeug aussteigt.

Bei einem nach Anspruch 4 weitergebildeten Verfahren wird das Abstandsregelungs-Abschaltsignal vom Fahrer bzw. von einem anderen Fahrzeuginsassen durch Betätigen eines separaten Abschaltbetätigungselementes, z.B. eines auch zur An- und Abschaltung von Geschwindigkeitsregelphasen und/oder zur Einstellung gewünschter Abstands- und/oder Geschwindigkeitssollwerte dienenden Tempomathebels, oder dadurch generiert, daß der Fahrer das Bremspedal betätigt oder ein Automatgetriebe-Wählhebel in einer Nichtvorwärtsfahrt-Stellung, z.B. den bekannten Stellungen P, R oder N, steht oder der Fahrer bei nicht-stehendem Fahrzeug das Fahrpedal überspielend betätigt, d.h. mit dem Fahrpedal eine höhere Beschleunigung anfordert als sie von der aktivierten Abstandsregelung momentan vorgegeben wird.

Bei einem nach Anspruch 5 weitergebildeten Verfahren ist vorteilhafterweise vorgesehen, daß das Fahrzeug bei aktiviertem Abstandsregelungsmodus dann, wenn es ebenso wie das Frontfahrzeug zum Stehen gekommen ist, z.B. im Stop&Go-Verkehr, und das Frontfahrzeug wieder anfährt, nicht selbsttätig anfährt, sondern zunächst ein Anfahraufforderungssignal angezeigt und erst angefahren wird, wenn daraufhin ein entsprechendes Anfahrsignal vom Fahrer oder einem anderen Fahrzeuginsassen eingegeben wird. Diese Maßnahme ist besonders dann zweckmäßig, wenn von der verwendeten Abstandssensorik, z.B. einer Radarsensorik, nicht mit völliger Sicherheit festgestellt werden kann, ob sich zwischen dem Fahrzeug und dem Frontfahrzeug Objekte wie Fußgänger, Radfahrer und dergleichen befinden. Der Fahrer kann dies kontrollieren, bevor er den Befehl gibt, dem losgefahrenen Frontfahrzeug abstandsgeregelt zu folgen. In weiterer Ausgestaltung dieser Maßnahme gemäß Anspruch 6 wird das fahrerseitige Anfahrsignal durch Betätigen eines separaten Betätigungselementes, z.B. des oben erwähnten Tempomathebels, oder durch Fahrpedalbetätigung bei stehendem Fahrzeug generiert.

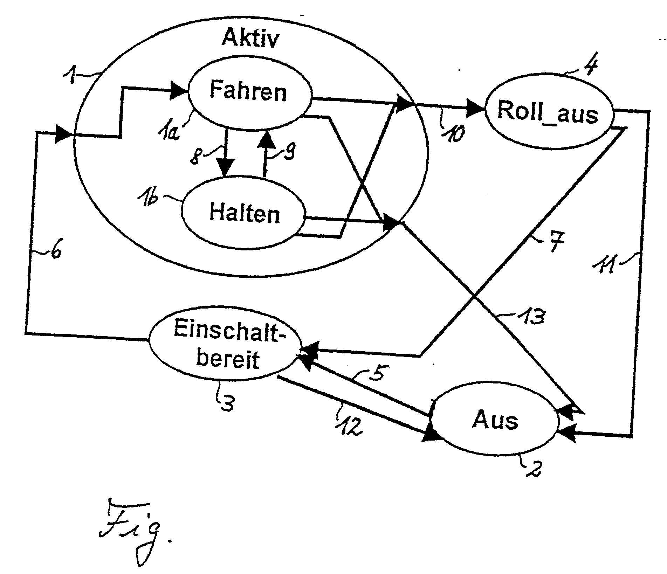

Vorteilhafte Ausführungsformen der Erfindung werden nachfolgend unter Bezugnahme auf die Zeichnung beschrieben.

Die einzige Figur zeigt eine Zustandsgraphendarstellung eines Verfahrens zur Längsbewegungssteuerung eines Kraftfahrzeuges.

Das in der Figur als Zustandsgraph illustrierte Verfahren zur Längsbewegungssteuerung eines Kraftfahrzeugs, insbesondere eines Automobils, beinhaltet einen Abstandsregelungsmodus 1, in welchem die Längsbewegung des Fahrzeugs selbsttätig durch eine Abstandsregelung gesteuert wird, und einen Abstandsregelungsinaktivitätsmodus 2, in welchem der Abstandsregelungsbetrieb ausgeschaltet ist und die Längsbewegung des Fahrzeugs in herkömmlicher, hier nicht weiter interessierender Weise manuell oder in Form eines geschwindigkeitsregelnden oder geschwindigkeitsbegrenzenden Betriebs gesteuert wird. Charakteristisch ist bei dem vorliegenden Verfahren, daß vom Inaktivitätsmodus 2 nicht direkt und selbsttätig in den Abstandsregelungsmodus 1 übergegangen, sondern zunächst ein Bereitschaftsmodus 3 aktiviert wird, von dem aus der Abstandsregelungsmodus 1 fahrerseitig aktivierbar ist. Der Abstandsregelungsmodus 1 teilt sich in einen fahraktiven Zustand 1a und einen halteaktiven Zustand 1b auf. Letzterer wird bei aktivem Abstandsregelungsmodus 1 angenommen, solange die Fahrgeschwindigkeit unter einem vorgebbaren Fahraktivitätsgrenzwert von beispielsweise 3 km/h liegt, während ansonsten der fahraktive Zustand 1a angenommen wird. Charakteristisch ist dabei des weiteren, daß eine Voraussetzung zur Aktivierung des Abstandsregelungsmodus 1 darin besteht, daß die Fahrzeuglängsgeschwindigkeit unterhalb eines vorgebbaren Geschwindigkeitsgrenzwertes liegt, der beispielsweise bei 40 km/h liegt, jedoch alternativ jeden anderen gewünschten Wert haben kann. Eine Verringerung der Fahrgeschwindigkeit selbst bis auf den Wert null führt für daher nicht zu einer Deaktivierung des Abstandsregelungsmodus 1. Weiter ist für das vorliegende Verfahren charakteristisch, daß kein selbsttätiger direkter Übergang vom Abstandsregelungsmodus 1 in den Inaktivitätsmodus 2 bewirkt wird, sondern zunächst in einen Ausrollmodus 4 übergegangen wird, von dem aus der Inaktivitätsmodus 2 fahrerangefordert zu aktivieren ist.

Das Verfahren eignet sich somit besonders zur abstandsgeregelten selbsttätigen Fahrzeugführung im niedrigen Geschwindigkeitsbereich, in welchem vergleichsweise geringe Fahrzeugabstände vorliegen und damit auch entsprechend kurze Reaktionszeiten nötig sind. Wegen diesen Gegebenheiten muß eine sichere Auswahl des Zielfahrzeugs der Abstandsregelung, d.h. desjenigen Frontfahrzeugs, welchem im vorgegebenen Sollabstand gefolgt werden soll, bereitgestellt werden. Da dies besonders in Stausituationen mit einscherenden Fahrzeugen und/oder stark verschwenkten Fahrbahnen von den herkömmlichen Abstandssensoriken nicht ohne weiteres garantiert werden kann, beinhaltet die vorliegende Steuerungsphilosophie die Maßnahme, diese Zielauswahl in die Verantwortung des Fahrzeugnutzers zu legen. Dies geschieht durch Verwendung des Bereitschaftsmodus 3 und des Ausrollmodus 4, mit denen bewirkt wird, daß das Aktivieren des Abstandsregelungsmodus 1 ebenso wie dessen endgültige Deaktivierung, d.h. der Übergang in den Inaktivitätsmodus 2, nur durch Eingabe eines jeweiligen Nutzerbefehls möglich ist, mit welchem der Fahrer oder ein anderer Fahrzeuginsasse die systemseitige Empfehlung, die Abstandsregelung zu aktivieren bzw. abzuschalten, nutzerseitig zu quittieren hat. Damit ist sichergestellt, daß das Abstandsregelsystem nie ein Ziel abstandsregelnd verfolgt, das nicht vom Fahrer bestätigt wurde. Nachfolgend wird detaillierter auf die einzelnen Verfahrensmaßnahmen eingegangen.

Die Aktivierung des Bereitschaftsmodus 3 bei bislang vorliegendem Abstandsregelungsinaktivitätsmodus 2, wie durch einen Zustandsübergangspfeil 5 symbolisiert, erfolgt selbsttätig dann, wenn vorgebbare Einschaltbedingungen vorliegen. In einem vorteilhaften Beispielsfall sind die Einschaltbedingungen so vorgegeben, daß sie erfüllt sind, wenn die Fahrgeschwindigkeit unterhalb eines vorgebbaren Geschwindigkeitsgrenzwertes von z.B. 40 km/h liegt, wie bereits oben erwähnt, und außerdem von der vorhandenen Abstandssensorik ein vorausfahrendes Fahrzeug, d.h. ein Frontfahrzeug, detektiert wird und die zur Abstandshaltung erforderliche Sollbeschleunigung einen vorgebbaren Beschleunigungsgrenzwert nicht überschreitet. Letzteres gewährleistet einen weitgehend ruckfreien Start einer jeweiligen Abstandsregelungsphase und bedingt, daß der Fahrer mit dem Fahrzeug vor der eigentlichen Aktivierung des Abstandsregelungsmodus 1 dem vorausfahrenden Fahrzeug mit ausreichend geringer Relativgeschwindigkeit und nicht zu großer Abweichung des Istabstandes vom für die anschließende Abstandsregelung gewünschten Sollabstand folgt.

Im aktivierten Bereitschaftsmodus 3 wird dann die Einschaltbereitschaft des Abstandsregelungssystems durch Erzeugung eines Bereitschaftssignals signalisiert, das für den Fahrzeugführer wahrnehmbar angezeigt wird, z.B. in Form einer sichtbar blinkenden Lampe. Während des so als aktiviert signalisierten Bereitschaftsmodus 3 kann dann nutzerseitig, vorzugsweise durch den Fahrer selbst, ein Abstastregelungsaktivierungssignal eingegeben werden, durch welches der Abstandsregelungsmodus 1 aktiviert wird, wie mit einem Zustandsübergangspfeil 6 angedeutet. Die Eingabe des Abstandsregelungsaktivierungssignals kann z.B. durch Betätigen eines Tempomathebels der oben erwähnten Art in eine bestimmte Stellung oder alternativ durch Betätigen eines anderen hierfür vorgesehenen Bedienelementes erfolgen. Sobald die genannten Einschaltbedingungen nicht mehr erfüllt sind, wird das Bereitschaftssignal nicht mehr angezeigt, und die Aktivierung des Abstandsregelungsmodus 1 ist nicht mehr möglich. Wenn die Einschaltbedingungen bei momentan aktiviertem Ausrollmodus 4 erfüllt sind, wird ebenfalls zunächst in den Bereitschaftsmodus 3 übergegangen, wie mit einem Zustandsübergangspfeil 7 angedeutet, in welchem wiederum nutzerseitig durch Eingabe des Abstandsregelungsaktivierungssignals der Abstandsregelungsmodus 1 aktiviert werden kann.

Eine aktivierte Abstandsregelungsphase 1 bleibt, wie gesagt, auch dann aufrechterhalten, wenn das Fahrzeug zum Stillstand kommt, d.h. vom fahraktiven Zustand 1a in den halteaktiven Zustand 1b gelangt, wie mit einem Zustandsübergangspfeil 8 symbolisiert. In diesem Fall stehen dann das eigene Fahrzeug und das Frontfahrzeug, beispielsweise während einer Stauphase oder an einer Kreuzung. Für das Verhalten beim darauffolgenden Anfahren gibt es zwei mögliche Alternativen. In einer ersten Variante fährt das Fahrzeug beim Anfahren des Frontfahrzeuges automatisch unter Aufrechterhaltung des Sollabstandes mit an. Diese Variante kann insbesondere dann verwendet werden, wenn durch entsprechende Sensoriken eine ausreichend sichere Überwachung des Bereichs vor dem Fahrzeug hinsichtlich dort befindlicher Objekte möglich ist, mit denen die rechtzeitige Detektion von vor dem Fahrzeug stehenden Fußgängern oder anderen Objekten garantiert werden kann. Für Anwendungsfälle, in denen dies nicht sicher gewährleistet ist, läßt sich vorteilhaft eine zweite Variante einsetzen, bei der nach detektiertem Losfahren des Frontfahrzeugs das eigene Fahrzeug zunächst noch stehen bleibt und ein Anfahraufforderungssignal für den Fahrer wahrnehmbar angezeigt wird. Dieses Anfahraufforderungssignal kann z.B. aus einem über einen Lautsprecher abgegebenen akustischen Anfahrton bestehen. Der Fahrer kann daraufhin überprüfen, ob der Bereich zwischen dem eigenen Fahrzeug und dem Frontfahrzeug frei ist, um bejahendenfalls ein Anfahrsignal einzugeben. Dieses kann daraus bestehen, daß er kurz das Fahrpedal betätigt oder den Tempomathebel oder ein anderes Bedienelement in eine vorgebbare Stellung verbringt. Erst auf die Eingabe des nutzerseitigen Anfahrsignals hin wird dann bei dieser Variante im aktivierten Abstandsregelungsmodus 1 durch das Abstandsregelsystem das Fahrzeug angefahren, um mit dem eingestellten Sollabstand dem schon angefahrenen Frontfahrzeug zu folgen, d.h. das Fahrzeug gelangt vom halteaktiven Zustand 1b wieder in den fahraktiven Zustand 1a, wie mit einem zugehörigen Zustandsübergangspfeil 9 symbolisiert.

Wenn während einer aktiven Abstandsregelungsphase 1 zu einem bestimmten Zeitpunkt vorgegebene Abschaltbedingungen vorliegen, geht das System selbsttätig in den Ausrollmodus 4 über, und zwar unabhängig davon, ob momentan der fahraktive Zustand 1a oder der halteaktive Zustand 1b vorliegt, wie durch einen Zustandsübergangspfeil 10 angedeutet. Die Abschaltbedingungen sind z.B. dergestalt vorgegeben, daß sie erfüllt sind, wenn das Frontfahrzeug nicht mehr detektiert wird, z.B. weil es abgebogen ist oder die Fahrbahn gewechselt hat oder wenn die Frontfahrzeugeigenschaft auf ein einscherendes Fahrzeug wechselt. Des weiteren ist bevorzugt vorgesehen, daß die Abschaltbedingungen auch dann erfüllt sind, wenn die Fahrertür, alternativ eine beliebige Fahrzeugtür, im Abstandsregelungsmodus 1 bei kleiner Fahrgeschwindigkeit länger als ein zugehöriger Türöffnungsdauergrenzwert von beispielsweise einer Sekunde geöffnet wird. Diese Maßnahme verhindert insbesondere, daß das Fahrzeug durch die Wirkung des Abstandsregelungssystems weiterfährt, wenn der Fahrer im aktivierten Abstandsregelungsmodus 1 aus dem Fahrzeug aussteigt.

Im Ausrollmodus 4 wird vom Längbewegungssteuersystem durch entsprechenden Eingriff insbesondere in die Bremsanlage die Geschwindigkeit des Fahrzeugs langsam bis zum Fahrzeugstillstand reduziert. Gleichzeitig wird ein Abschaltaufforderungssignal erzeugt und für den Fahrer wahrnehmbar angezeigt, z.B. als akustischer Warndauerton. Sobald der Fahrer bei laufendem Ausrollmodus 4 ein entsprechendes Abstandsregelungs-Abschaltsignal eingibt, wird die Abstandsregelung deaktiviert, d.h. das System geht in den Abstandsregelungsinaktivitätszustand 2 über, wie durch einen Zustandsübergangspfeil 11 symbolisiert. Für die Eingabe des Abstandsregelungs-Abschaltsignals hat der Fahrer mehrere Möglichkeiten, nämlich durch Betätigen des Bremspedals, überspielendes Betätigen des Fahrpedals oder Verbringen des Tempomathebels oder eines anderen hierfür vorgesehenen Bedienelementes in eine entsprechende Aus-Stellung. Weiter kann vorgesehen sein, im aktivierten Ausrollmodus 4 die selbsttätige Längsbewegungssteuerung neben der kontinuierlichen Geschwindigkeitsreduktion auch insoweit aufrechtzuerhalten, daß ein Auffahren auf vor dem Fahrzeug sensierte Objekte verhindert wird, d.h. es wird ein vorgebbarer Mindestabstand zu vorausliegenden Objekten eingehalten.

Wenn während des Ausrollmodus 4 die Einschaltbedingungen erfüllt werden, geht das System wie erwähnt gemäß Pfeil 7 in den Bereitschaftszustand 3 über, wodurch das Bereitschaftssignal angezeigt wird. Der Fahrer kann daraufhin eine neue Abstandsregelphase 1 auslösen oder alternativ den Ausrollmodus 4 und den Bereitschaftsmodus 3 durch Eingabe des Abstandsregelungs-Abschaltsignals beenden, so daß das System in den Inaktivitätsmodus 2 übergeht, wie durch einen Zustandsübergangspfeil 12 symbolisiert.

Ein aktivierter Abstandsregelungsbetrieb 1 kann auch bei weiterhin vorliegenden Einschaltbedingungen jederzeit direkt durch Eingabe des Abstandsregelungs-Abschaltsignals deaktiviert werden, unabhängig davon, ob sich das System gerade im fahraktiven Zustand 1a oder im halteaktiven Zustand 1b befindet, woraufhin das System den Inaktivitätszustands 2 einnimmt, wie durch einen Zustandsübergangspfeil 13 angedeutet. Die Eingabe des Abschaltsignals kann auch hier wieder durch Betätigen des Bremspedals, überspielendes Betätigen des Fahrpedals oder Verbringen des Tempomathebels oder eines anderen Bedienelementes in die zugehörige Aus-Stellung erzeugt werden. Eine Ausnahme hiervon ist für die oben beschriebene zweite Anfahrvariante zweckmäßig, bei der im aktiven Abstandsregelungsbetrieb nicht automatisch, sondern nur nach Fahrerquittierung angefahren wird. In diesem Fall führt eine Fahrpedalbetätigung dann nicht zur Abstandsregelungsabschaltung, wenn während eines vorangegangenen Zeitintervalls vorgebbarer Dauer von z.B. zwei Sekunden das Anfahraufforderungssignal, d.h. hier der erwähnte Anfahrton, angezeigt wurde. Die Fahrpedalbetätigung wird in dieser Situation vielmehr als das quittierende, fahrerseitige Anfahrsignal zum Anfahren im Abstandsregelungsmodus 1 gewertet. Als Abstandsregelungs-Abschaltsignal wird bei Vorhandensein eines Automatgetriebes mit Wählhebel auch dessen Verbringen in eine Nichtvorwärtsfahrt-Stellung gewertet, insbesondere in eine der Stellungen P, R oder N, d.h. in Park-, Rückwärtsfahrt- oder Leerlaufstellung.

Das beschriebene Verfahren ist in herkömmliche Abstandsregeleinrichtungen implementierbar, wozu der Fachmann lediglich die für ihn bei Kenntnis des Verfahrens offensichtlichen Hardwareund/oder Softwaremodifikationen vornehmen braucht. Insbesondere sind in eine zugehörige Abstandsregelungs-Steuereinheit die Funktionen des Bereitschaftsmodus und des Ausrollmodus und bei Bedarf der spezielle Anfahrbetrieb bei aktivierter Abstandsregelung zu implementieren.

Es versteht sich, daß neben der oben im Detail beschriebenen Realisierung weitere Realisierungen des erfindungsgemäßen Verfahrens und der zu dessen Durchführung geeigneten Vorrichtung für den Fachmann im Rahmen der durch die beigefügten Ansprüche festgelegten Erfindung möglich sind. So kann in vereinfachten Spezialfällen auf die Unterteilung des Abstandsregelungsmodus in den fahraktiven und den halteaktiven Zustand verzichtet werden, und es kann gegebenenfalls entweder der Ausrollmodus oder der Bereitschaftsmodus entfallen.

## Patentansprüche

1. Verfahren zur Längsbewegungssteuerung eines Kraftfahrzeuges, bei dem
- bei Vorliegen vorgebbarer Einschaltbedingungen, die das Vorhandensein eines vorausfahrenden Fahrzeuges umfassen, ein Abstandsregelungsmodus (1) aktivierbar ist, in welchem der Abstand des Fahrzeugs zu einem vorausfahrenden Fahrzeug selbsttätig geregelt wird,
**dadurch gekennzeichnet, daß**
- eine der vorgebbaren Einschaltbedingungen darin besteht, dass die Fahrgeschwindigkeit des eigenen Fahrzeugs unterhalb eines vorgebbaren Geschwindigkeitsgrenzwertes liegt,
- bei bislang deaktiviertem Abstandsregelungsmodus (1) dann, wenn die Einschaltbedingungen vorliegen, zunächst ein Bereitschaftsmodus (3) aktiviert wird, in welchem ein Bereitschaftssignal angezeigt und erst dann der Abstandsregelungsmodus aktiviert wird, wenn ein fahrerseitiges Abstandsregelungsaktivierungssignal eingegeben wird, und
- bei bislang aktiviertem Abstandsregelungsmodus dann, wenn vorgebbare Abschaltbedingungen vorliegen, zunächst ein Ausrollmodus (4) aktiviert wird, in welchem ein Abschaltaufforderungssignal angezeigt und das Fahrzeug stetig verlangsamt wird, bis ein fahrerseitiges Abstandsregelungs-Abschaltsignal eingegeben wird oder vorgebbare Einschaltbedingungen vorliegen und ein fahrerseitiges Abstandsregelungsaktivierungssignal eingegeben wird.

2. Verfahren nach Anspruch 1, weiter
**dadurch gekennzeichnet, daß**
eine weitere Einschaltbedingung darin besteht, dass ein vorausfahrendes Fahrzeug detektiert wird und die zur Abstandshaltung erforderliche Sollbeschleunigung einen vorgebbaren Beschleunigungsgrenzwert nicht überschreitet.

3. Verfahren nach Anspruch 1 oder 2, weiter
**dadurch gekennzeichnet, daß**
die Abschaltbedingungen darin bestehen, dass das vorausfahrende Fahrzeug verlorengeht oder eine Fahrzeugtür länger als ein vorgebbarer Türöffnungsdauergrenzwert geöffnet ist.

4. Verfahren nach einem der Ansprüche 1 bis 3, weiter
**dadurch gekennzeichnet, daß**
das Abstandsregelungs-Abschaltsignal durch Betätigen eines Bremspedals oder eines Fahrpedals bei fahrendem Fahrzeug oder eines anderen Bedienelementes oder durch Verbringen eines Automatgetriebe-Wählhebels in eine Nichtvorwärtsfahrt-Stellung generiert wird.

5. Verfahren nach einem der Ansprüche 1 bis 4, weiter
**dadurch gekennzeichnet, daß**
bei aktiviertem Abstandsregelungsmodus (1) und stehendem Fahrzeug sowie stehendem vorausfahrendem Fahrzeug nach Anfahren des vorausfahrenden Fahrzeugs ein Anfahraufforderungssignal angezeigt und erst angefahren wird, wenn ein fahrerseitiges Anfahrsignal eingegeben wird.

6. Verfahren nach Anspruch 5, weiter
**dadurch gekennzeichnet, daß**
das fahrerseitige Anfahrsignal durch Betätigen eines Fahrpedals oder eines anderen Bedienelementes generiert wird.

## Claims

1. Method for controlling the longitudinal travel of a motor vehicle whereby
- if pre-settable activation conditions prevail, including the presence of a vehicle travelling ahead, a distance control mode (1) can be activated in which the distance of the vehicle from a vehicle travelling in front is automatically controlled,
**characterised in that**
- one of the pre-settable activation conditions is that the travel speed of the vehicle itself is below a pre-settable speed threshold value,
- if the distance control mode (1) has been operating in deactivated mode and the activation conditions then occur, a ready mode (3) is initially activated, in which a ready signal is indicated and the distance control mode is not activated unless a driver-side distance control enable signal is entered,
- if the distance control mode has been operating in activated mode and pre-settable deactivation conditions then occur, a cruise mode (4) is initially activated in which a disable prompt signal is indicated and the vehicle is continuously slowed until a driver-side distance control disable signal is entered or pre-settable activation conditions prevail and a driver-side distance control enable signal is entered.

2. Method as claimed in claim 1, further
**characterised in that**
another activation condition is that a vehicle travelling in front is detected and the desired acceleration needed to maintain the distance does not exceed a pre-settable acceleration threshold value.

3. Method as claimed in claim 1 or 2, further
**characterised in that**
the deactivation conditions are that the vehicle travelling in front disappears or a vehicle door is opened for longer than a pre-settable threshold value for a door-opening time.

4. Method as claimed in one of claims 1 to 3, further
**characterised in that**
the distance control disable signal is generated by operating a brake pedal or an accelerator pedal whilst the vehicle is travelling, or any other operating element, or by shifting an automatic gear-change lever into a non-forward-drive position.

5. Method as claimed in one of claims 1 to 4, further
**characterised in that**
when the vehicle is stationary and the distance control mode (1) is activated and the vehicle in front is stationary, a drive-off prompt signal is indicated when the vehicle in front drives off and it is not possible to drive off until a driver-side drive-off signal has been entered.

6. Method as claimed in claim 5, further
**characterised in that**
the driver-side drive-off signal is generated by operating an accelerator pedal or another operating element.

## Revendications

1. Procédé de commande du déplacement longitudinal d'un véhicule à moteur, dans le cas duquel :
- en présence de conditions de mise en route pouvant être imposées, qui comprennent la présence d'un véhicule circulant devant, un mode de régulation de la distance de séparation (1), avec lequel la distance de séparation entre le véhicule et un véhicule circulant devant est régulée automatiquement, peut être activé,
**caractérisé en ce que** :
- une des conditions de mise en route pouvant être imposées consiste dans le fait que la vitesse de déplacement du véhicule propre est inférieure à une valeur limite de vitesse pouvant être imposée,
- avec un mode de régulation de la distance de séparation (1) désactivé jusque là a lieu, lorsque les conditions de mise en route existent, d'abord une activation d'un mode de disponibilité (3), dans lequel un signal de disponibilité est affiché et le mode de régulation de la distance de séparation n'est activé que lorsqu'un signal d'activation de la régulation de la distance de séparation provenant du conducteur est appliqué et
- avec un mode de régulation de la distance de séparation (1) activé jusque là a lieu d'abord, lorsque des conditions de mise en route pouvant être imposées existent, une activation d'un mode de poursuite de la circulation par inertie (4), dans lequel un signal de demande d'arrêt est affiché et le véhicule est constamment ralenti jusqu'à ce qu'un signal d'arrêt de la régulation de la distance de séparation provenant du conducteur soit appliqué ou jusqu'à ce que des conditions de mise en route pouvant être imposées existent et qu'un signal d'activation de la régulation de la distance de séparation provenant du conducteur soit appliqué.

2. Procédé selon la revendication 1, **caractérisé en outre en ce qu'**une autre condition de mise en route est constituée par le fait qu'un véhicule circulant devant est détecté et que l'accélération de consigne nécessaire pour maintenir la distance de séparation ne dépasse pas une valeur limite d'accélération pouvant être imposée.

3. Procédé selon la revendication 1 ou 2,
**caractérisé en outre en ce que** les conditions de mise à l'arrêt sont constituées par le fait que le véhicule circulant devant a disparu ou qu'une portière de véhicule est ouverte plus longtemps qu'une valeur limite de temps d'ouverture de portière pouvant être imposée.

4. Procédé selon l'une des revendications 1 à 3,
**caractérisé en outre en ce que** le signal d'arrêt de la régulation de la distance de séparation est généré par l'actionnement, lorsque le véhicule circule, d'une pédale de freinage ou d'une pédale de conduite ou d'un autre élément de commande ou par le positionnement d'un levier de sélection d'une boîte de vitesse automatique dans une position ne correspondant pas à une marche avant.

5. Procédé selon l'une des revendications 1 à 4,
**caractérisé en outre en ce que**, le mode de régulation de la distance de séparation (1) étant activé et le véhicule ainsi que le véhicule circulant devant étant à l'arrêt, après le démarrage du véhicule circulant devant, un signal de demande de démarrage est affiché et le démarrage n'a lieu qu'après qu'un signal de démarrage provenant du conducteur ait été appliqué.

6. Procédé selon la revendication 5, **caractérisé en outre en ce que** le signal de démarrage provenant du conducteur est généré par l'actionnement d'une pédale d'accélérateur ou d'un autre élément de commande.
